# EUROPEAN PATENT SPECIFICATION

(11) **EP 3 565 138 B1**
(45) Date of publication and mention of the grant of the patent: **07.07.2021**
(21) Application number: 17889714.6
(22) Date of filing: 03.01.2017
(51) Int. Cl.: H04B 7/06, H04B 7/08, H04B 7/0417

(54) **COMMUNICATION METHOD, TERMINAL DEVICE AND NETWORK DEVICE**
KOMMUNIKATIONSVERFAHREN, ENDGERÄTEVORRICHTUNG UND NETZWERKVORRICHTUNG
PROCÉDÉ DE COMMUNICATION, DISPOSITIF TERMINAL ET DISPOSITIF RÉSEAU

(43) Date of publication of application: 06.11.2019
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2017/000078
(87) International publication number: WO 2018/126343

(56) References cited:
- WO-A1-2013/133672
- WO-A1-2015/139208
- CN-A- 105 379 140
- US-A1- 2015 009 968
- US-A1- 2015 244 432
- US-A1- 2015 244 432

## Description

### TECHNICAL FIELD

Embodiments of the present application relate to the field of communication, and particularly, to a communication method, a terminal device and a network device.

### BACKGROUND

In a multi-beam system, a terminal device may receive data, which are transmitted by a network device through a plurality of transmitting beams, through one receiving beam. To ensure effects of data reception, channel qualities corresponding to beam pairs, which respectively consist of each of a plurality of transmitting beams and a receiving beam of the terminal device, must meet certain conditions. If the channel quality corresponding to the beam pair composed of the transmitting beam and the receiving beam is poor, it is not conducive to data reception. In order to ensure that the channel quality corresponding to the beam pair composed of the transmitting beam and the receiving beam can meet conditions, the terminal device needs to report status of the channel quality corresponding to the beam pair. Therefore, how to report the channel quality corresponding to the beam pair is a problem to be studied. Related technology is known from US 2015/244432 A1 and US 2015/009968 A1.

### SUMMARY

The invention is defined by the independent claims.

### BRIEF DESCRIPTION OF THE DRAWINGS

FIG. 1 is a schematic diagram of a possible application scenario of an embodiment of the present application.
FIG. 2 is a schematic diagram of a transmitting beam and a receiving beam of an embodiment of the present application.
FIG. 3 is a schematic flow chart of a communication method of an embodiment of the present application.
FIG. 4 is a schematic diagram of a transmitting beam and a receiving beam of an embodiment of the present application.
FIG. 5 is a schematic flow chart of a communication method of an embodiment of the present application.
FIG. 6 is a schematic diagram of a transmitting beam and a receiving beam of an embodiment of the present application.
FIG. 7 is a schematic flow chart of a communication method of an embodiment of the present application.
FIG. 8 is a schematic flow chart of a communication method of an embodiment of the present application.
FIG. 9 is a schematic block diagram of a terminal device of an embodiment of the present application.
FIG. 10 is a schematic block diagram of a terminal device of an embodiment of the present application.
FIG. 11 is a schematic block diagram of a network device of an embodiment of the present application.
FIG. 12 is a schematic block diagram of a network device of an embodiment of the present application.
FIG. 13 is a schematic block diagram of a terminal device of an embodiment of the present application.
FIG. 14 is a schematic block diagram of a terminal device of an embodiment of the present application.
FIG. 15 is a schematic block diagram of a network device of an embodiment of the present application.
FIG. 16 is a schematic block diagram of a network device of an embodiment of the present application.
FIG. 17 is a schematic block diagram of a system-on-chip of an embodiment of the present application.

### DETAILED DESCRIPTION

The technical solutions in embodiments of the present application will be described in the following with reference to drawings of the embodiments of the present application.

The solution of the embodiments of the present application may be applied to various communication systems, such as Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, Universal Mobile Telecommunication System (UMTS), NR (New Radio Access Technology), 5G or the like.

It should also be understood that, in embodiments of the present application, the terminal device may include but is not limited to a Mobile Station (MS), a Mobile Terminal, a Mobile Telephone, a User Equipment (UE), a handset, portable equipment and so on. The terminal device may communicate with one or more core networks via Radio Access Network (RAN). For example, the terminal device may be a mobile phone (or also called as a "cellular" phone), a computer with radio communication function and so on. The terminal device may also be a mobile device which is portable, pocket-sized, handheld, computer-integrated or in-vehicle.

In embodiments of the present application, a network device may be an access network equipment, such as a base station, a Transmit and Receive Point (TRP) or an access point. The base station may be a Base Transceiver Station (BTS) of GSM or CDMA. It may also be a base station (NodeB) of WCDMA, an evolved Node B (eNB or e-NodeB) of LTE, or a base station (gNB) of NR or 5G. This is not specifically restricted in embodiments of the present application. In addition, the 5G system or network herein may also be called as a New Radio (NR) system or network.

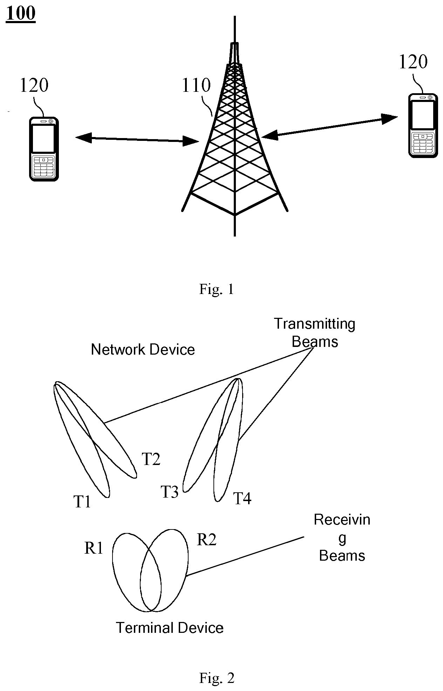

A possible application scenario of embodiments of the present application is briefly introduced in the following with reference to FIG. 1 and FIG. 2.

FIG. 1 shows a wireless communication system 100 applied in embodiments of the present application. The wireless communication system 100 may include a network device 110, and at least one terminal device 120 located within the coverage of the network device. The network device 110 may transmit data to the terminal device 120 through a transmitting beam, and the terminal device 120 may receive data transmitted by the network device 110 through a receiving beam.

FIG. 2 shows a schematic diagram of a transmitting beam and a receiving beam of an embodiment of the present application. In FIG. 2, the network device has 4 transmitting beams while the terminal device has 2 receiving beams. The network device may transmit data through these 4 transmitting beams to the terminal device while the terminal device may receive data, which are transmitted by the network device through the 4 transmitting beams, through two receiving beams. When transmitting data, each of the transmitting beams usually corresponds to an optimal receiving beam. For example, the optimal receiving beam corresponding to the transmitting beam T1 is R1, and the optimal receiving beam corresponding to the transmitting beam T2 is R2. If the receiving beam R2 is used to receive data transmitted by the transmitting beam T1, the reception effects will be relatively poor. Similarly, if the receiving beam R1 is used to receive data transmitted by the transmitting beam T2, the reception effects will also be relatively poor. If the receiving beam R1 is used to receive data transmitted by the transmitting beams T1 and T2, effects of receiving data from T1 by the terminal device will be relatively good, but effects of receiving data from T2 will be relatively poor. When the optimal receiving beam corresponding to both the transmitting beam T1 and the transmitting beam T2 is R1, effects of using the receiving beam R1 to receive data of the transmitting beams T1 and T2 will be relatively good.

In a case that a plurality of transmitting beams are used to jointly transmit data to the terminal device, for example, in FIG. 2, when the transmitting beams T1 and T2 are used to jointly transmit data, the terminal device can only use one receiving beam to receive data transmitted by the transmitting beams T1 and T2. However, in this case, it is required that channel qualities corresponding to the beam pairs which consist of R1 and respective T1 or T2 should be better, or that channel qualities corresponding to the beam pairs which consist of R2 and respective T1 or T2 should be better, so that the transmitting beams T1 and T2 can be used to jointly transmit data to the terminal device.

Similarly, taking FIG. 2 as an example, when the network device transmits downlink control information and downlink data to the terminal device respectively on the transmitting beams T1 and T2, if the terminal device receives the downlink control information and the downlink data transmitted by the terminal device respectively on the receiving beams R1 and R2, because the terminal device needs to switch the receiving beam to R2 to receive downlink data transmitted by the network device after demodulating downlink control information on the receiving beam R1, which requires a certain switching time, it may result in a loss of part of the downlink data. Therefore, in this case, the terminal device also needs to use one receiving beam to receive downlink control information and downlink data transmitted through the two transmitting beams T1 and T2.

Both in the case of jointly transmitting data through a plurality of beams and in the case of separately transmitting control information and data through various beams, it is necessary to group transmitting beams. Transmitting beams divided into one group may correspond to a same receiving beam, and the reception effects of receiving data of this group of transmitting beams by using this receiving beam are better.

However, which transmitting beams are divided into one group by the network device depends on information of beam pairs reported by the terminal device. How to report the information of beam pairs in embodiments of the present application will be described in detail in the following with reference to the drawings.

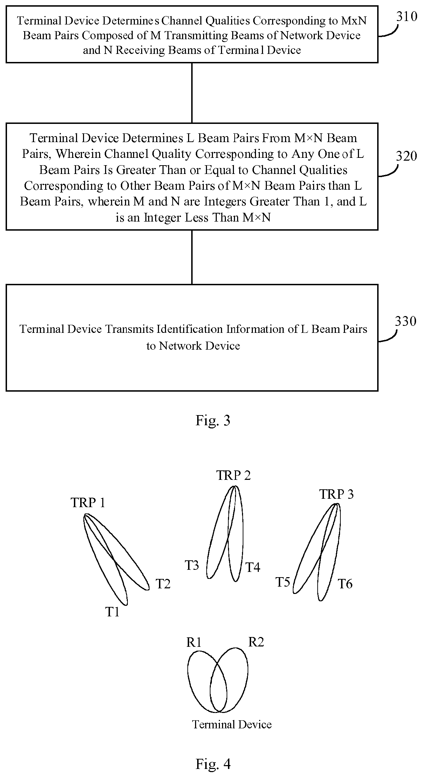

FIG. 3 is a schematic flow chart of a communication method of an embodiment of the present application. The method of FIG. 3 comprises following steps.

At 310, a terminal device determines channel qualities corresponding to M×N beam pairs composed of M transmitting beams of a network device and N receiving beams of the terminal device.

For example, as shown in FIG. 4, the network device has 3 Transmit and Receive Points (TRPs), i.e., TRP1, TRP2, and TRP3, wherein TRP1 comprises transmitting beams T1 and T2, TRP2 comprises transmitting beams T3 and T4, and TRP3 comprises transmitting beams T5 and T6. The terminal device has two receiving beams R1 and R2. In FIG. 4, the network device has a total of 6 transmitting beams, and the terminal device has a total of 2 receiving beams. The transmitting beams of the network device and the receiving beams of the terminal device form a total of 12 beam pairs. When the terminal device receives signals, which are transmitted by the network device through various transmitting beams, through various receiving beams, effects of receiving the signals are not the same, that is, channel qualities corresponding to various beam pairs are different. It should be understood that, in FIG. 4, every two transmitting beams corresponds to one TRP. In fact, in embodiments of the present application, M transmitting beams may correspond to a same TRP, or may correspond to a plurality of various TRPs.

Optionally, the terminal device may determine channel qualities corresponding to the M×N beam pairs by measuring signal qualities of measurement signals transmitted by the respective transmitting beams of the network device and received by using various receiving beams.

Specifically, taking FIG. 4 as an example, the terminal device may receive measurement signals transmitted by the network device through the 6 transmitting beams by firstly using the receiving beam R1, and then the terminal device receives measurement signals transmitted by the network device through the 6 transmitting beams by using the receiving beam R2, The received measurement signals are measured to obtain channel quality corresponding to each of beam pairs.

At 320, the terminal device determines L beam pairs from the M×N beam pairs, wherein channel quality corresponding to any one beam pair of the L beam pairs is greater than or equal to channel qualities corresponding to other beam pairs of the M×N beam pairs than the L beam pairs, wherein M and N are integers greater than 1, and L is an integer less than M×N.

Alternatively, the above L may be a pre-configured value. That is to say, the terminal device may select a certain number of beam pairs with better channel quality from all the beam pairs based on the channel qualities. The value of L may be a value specified in a communication protocol, or may be a value configured by the network device for the terminal device. Specifically, L may be a value which is statically configured by the network device for the terminal device (for example, configure for the terminal device when it just accesses the network), or may also be a value which is dynamically configured for the terminal device through indication information before the terminal device needs to report channel qualities corresponding to beam pairs. In addition, it should be understood that the above L may also be equal to M×N.

At 330, the terminal device transmits identification information of the L beam pairs to the network device.

It should be understood that the terminal device may transmit the identification information of the beam pairs to the network device, for example, the terminal device may periodically report the identification information of the beam pairs to the network device.

In addition, the terminal device may also transmit the identification information of the beam pairs to the network device after receiving the indication information of the network device. Specifically, the terminal device receives reporting indication information transmitted by the network device, wherein the reporting indication information is used to instruct the terminal device to transmit identification information of a beam pair, which consists of a transmitting beam of the network device and a receiving beam of the terminal device, to the network device. After receiving the reporting indication information, the terminal device transmits the identification information of the beam pairs to the network device.

Optionally, the terminal device may transmit information of channel qualities corresponding to the above L beam pairs to the network device.

It should be understood that, when reporting information to the network device, the terminal device may report only the identification information of these L beam pairs, or may report both the identification information of the L beam pairs and the information of channel qualities corresponding to the L beam pairs.

As shown in FIG. 4, the terminal device may select 6 beam pairs with best channel qualities from 12 beam pairs based on channel qualities, and transmit identification information of the 6 beam pairs to the network device. In FIG. 4, the identifications of the transmitting beams respectively are T1, T2, T3, T4, T5, and T6. The identifications of the receiving beams respectively are R1 and R2. The identification information of the beam pairs reported by the terminal device may specifically be [T3 R1], [T4 R1], [T3 R2], [T4 R2], [T1 R1], and [T2 R2] (of course, these beam pairs are merely used as examples to illustrate the identification information, and the terminal device may also report the identification information of other 6 beam pairs).

The communication methods in prior art and of embodiments of the present application are described in detail in the following still taking Fig. 4 as an example. In FIG. 4, it is assumed that channel qualities of beam pairs, which are composed of the respective transmitting beams B1, B2, B5, and B6 and the receiving beam(s), are poor, and only the channel qualities of the beam pairs, which are composed of the respective transmitting beams B3 and B4 and the receiving beam(s), are better, wherein the channel qualities corresponding to the beam pairs, which are composed of the transmitting beams B3 and B4 and the receiving beams R1 and R2, are as follows:
[B3 R1] 1
[B3 R2] 0.9
[B4 R1] 0.8
[B4 R2] 1

In the prior art, the terminal device only reports transmitting beams with better channel qualities and the optimal receiving beam of the transmitting beam. Specifically, the terminal device only reports related information of the beam pairs [B3 R1] and [B4 R2] to the network device. When a network device needs to transmit data to a receiving beam of a terminal device through a plurality of transmitting beams, the network device needs to group the transmitting beams. However, the information acquired by the network device is very limited (i.e., the optimal receiving beam of the transmitting beam B3 is R1, and the optimal receiving beam of the transmitting beam B4 is R2), and the beams B3 and B4 cannot be divided into one group based on this limited information, and then in some cases, it is impossible to transmit data to the same receiving beam of the terminal device by using a plurality of transmitting beams.

In embodiments of the present application, the terminal device selects the beam pair(s) to be reported based on the channel quality corresponding to each beam pair, and selects beam pair(s) with better channel quality. For example, specifically, the terminal device may report [B3 R1], [B3 R2], [B4 R1], and [B4 R2] to the network device. The channel qualities corresponding to the beam pairs composed of the transmitting beams both B3 and B4 and the receiving beams are better. Therefore, when it is required that data be jointly transmitted through two transmitting beams to the same receiving beam of the terminal device, the network device may divide B3 and B4 into one group, and the receiving beam corresponding to this group of transmitting beams may be either the receiving beam R1 or the receiving beam R2. Therefore, the communication method in embodiments of the present application can make it better to report information of the beam pairs compared with the prior art, so that the network device can group the transmitting beams based on the reported information of the beam pairs.

The terminal device can directly select part of beam pairs with better channel qualities from all beam pairs, and report identification information of this part of beam pairs to the network device, so that the network device can obtain the identification information of beam pairs with better channel qualities, and reasonably group the transmitting beams based on the identification information of this part of beam pairs.

Optionally, the terminal device may sort the M×N beam pairs firstly based on values of channel qualities in determining the L beam pairs, and then determine the L beam pairs from the M×N beam pairs based on the sorting results.

The M×N beam pairs may be sorted in order of channel qualities from high to low, or in order of channel qualities from low to high. The terminal device may select the L beam pairs with the best channel qualities from all the beam pairs after the sorting is completed. For example, if the transmitting beam and the receiving beam form a total of 10 beam pairs, then the 10 beam pairs can be sorted in order of channel qualities from high to low, and then the first 5 beam pairs with better channel qualities are selected from the 10 beam pairs.

Optionally, the terminal device may select L beam pairs based on the relationship between channel quality of a beam pair and a preset threshold in determining the L beam pairs. For example, the terminal device may select the L beam pairs with channel qualities greater than the first threshold from the M×N beam pairs. In this case, the terminal may not sort the beam pairs based on the channel qualities of the beam pairs, but directly compare the channel quality corresponding to each beam pair with the first threshold, and report information of the beam pairs with channel qualities greater than the first threshold. Of course, the terminal device can also sort the beam pairs based on the channel qualities of the beam pairs, and then compare the channel quality of each beam pair with the first threshold, and then report information of the beam pairs with channel qualities greater than the first threshold.

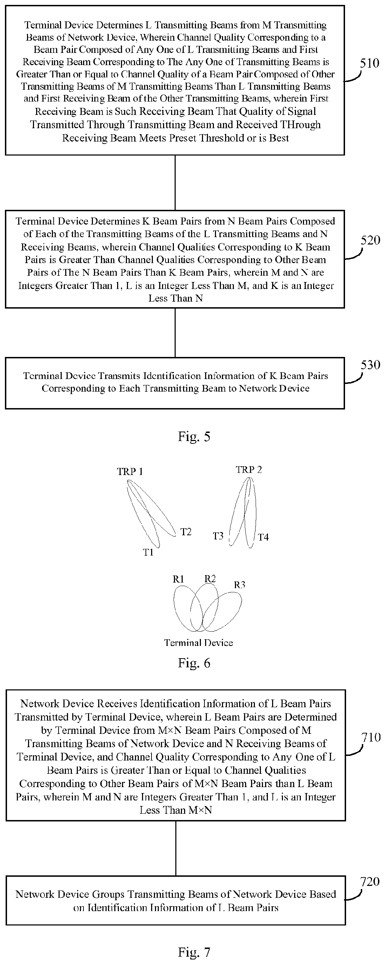

As shown in FIG. 4, 6 transmitting beams of the network device and 2 receiving beams of the terminal device may form 12 beam pairs. The terminal device may firstly sort the 12 beam pairs in order of corresponding channel qualities before determining the information of the beam pairs to be reported, and the result of the sorting is as follows:
[T2 R1] 1
[T3 R2] 1
[T5 R1] 0.9
[T6 R2] 0.9
[T5 R2] 0.8
[T6 R1] 0.8
[T4 R2] 0.2
[T1 R1] 0.2
[T1 R2] 0.1
[T2 R2] 0.1
[T3 R1] 0.1
[T4 R1] 0.1

The terminal device may determine the beam pairs to be reported in the following two manners:

The first manner: the terminal device selects 6 beam pairs with the best channel qualities (where L is 6), and these 6 beam pairs and the channel qualities corresponding to these 6 beam pairs are as follows:
[T2 R1] 1
[T3 R2] 1
[T5 R1] 0.9
[T6 R2] 0.9
[T5 R2] 0.8
[T6 R1] 0.8

The second manner: the terminal device selects beam pairs with channel qualities greater than 0.8 (the corresponding L is 4 when the first threshold is 0.8, and the corresponding L is 6 when the first threshold is less than 0.8 and greater than 0.2), these 4 beam pairs and the channel qualities corresponding to these 4 beam pairs are as follows:
[T2 R1] 1
[T3 R2] 1
[T5 R1] 0.9
[T6 R2] 0.9

It should be understood that the beam pairs may be sorted based on the channel qualities before selecting the beam pairs to be reported in the above two manners, or the beam pairs to be reported may be directly selected without being sorted in order of the corresponding channel qualities.

FIG. 5 is a schematic flow chart of a communication method of an embodiment of the present application. The method of FIG. 5 comprises following steps.

At 510, a terminal device determines L transmitting beams from M transmitting beams of a network device,

wherein channel quality corresponding to a beam pair composed of any one of the transmitting beams of the L transmitting beams and a first receiving beam corresponding to the any one of the transmitting beams is greater than or equal to channel quality of a beam pair composed of any one of other transmitting beams of the M transmitting beams than the L transmitting beams and a first receiving beam of the any one of other transmitting beams, wherein the first receiving beam is such a receiving beam that quality of a signal transmitted through a transmitting beam and received through the receiving beam meets a preset threshold or is the best.

Alternatively, the above L may be a pre-configured value. That is to say, the terminal device may select a certain number of beam pairs with better channel qualities from all the beam pairs based on the channel qualities. The value of L may be a value specified in a communication protocol, or may be a value configured by the network device for the terminal device. Specifically, L may be a value which is statically configured by the network device for the terminal device (for example, configured for the terminal device when it just accesses the network), or may also be a value which is dynamically configured for the terminal device through indication information before the terminal device needs to report channel qualities corresponding to beam pairs. In addition, it should be understood that the above L may also be equal to M×N.

It should be understood that the terminal device may select L transmitting beams with better channel qualities from all the transmitting beams, and the channel qualities corresponding to the beam pairs composed of the L transmitting beams and the first receiving beam(s) are better.

For example, as shown in FIG. 4, there are 6 transmitting beams, and the qualities of the signals received by the terminal device from the transmitting beams T3 and T4 are greater than the qualities of the signals received by the terminal device from the transmitting beams T1, T2, T5, and T6. Then the terminal device may select two transmitting beams T3 and T4 from these 6 transmitting beams.

The optimal receiving beam is described in the following by taking the transmitting beam T3 as an example. T3 may correspond to the receiving beams R1 and R2. Then, as long as the channel quality corresponding to [T3 R1] is greater than the channel quality corresponding to [T3 R2], the optimal receiving beam of T3 is R1.

At 520, the terminal device determines K beam pairs from N beam pairs composed of each transmitting beam of the L transmitting beams and N receiving beams, wherein channel qualities corresponding to the K beam pairs are greater than channel qualities corresponding to other beam pairs of the N beam pairs than the K beam pairs, wherein M and N are integers greater than 1, L is an integer less than M, and K is an integer less than N.

Alternatively, K mentioned above may be a pre-configured value. The value of K may be a value specified in a communication protocol, or may be a value configured by the network device for the terminal device. Specifically, L may be a value which is statically configured by the network device for the terminal device (for example, configured for the terminal device when it just accesses the network), or may also be a value which is dynamically configured for the terminal device through indication information before the terminal device needs to report channel qualities corresponding to beam pairs. In addition, it should be understood that the above K may also be equal to N.

It should be understood that the terminal device will select K beam pairs from all beam pairs composed of each of the L transmitting beams and the receiving beams. If there are a total of 3 transmitting beams, the terminal device will respectively select K beam pairs from all the beam pairs composed of each transmitting beam from these 3 transmitting beams and the receiving beams. In addition, the value of K may be various for various transmitting beams. For example, 3 beam pairs may be selected from all the beam pairs (where the value of K is 3) composed of the first transmitting beam and the receiving beams while, for the second transmitting beam, 2 beam pairs may be selected from all beam pairs (where the value of K is 2) composed of the second transmitting beam and the receiving beams.

At 530, the terminal device transmits identification information of the K beam pairs corresponding to each of the transmitting beams to the network device.

It should be understood that the terminal device may transmit the identification information of the beam pairs to the network device voluntarily. For example, the terminal device may periodically report the identification information of the beam pairs to the network device.

In addition, the terminal device may also transmit the identification information of the beam pairs to the network device after receiving the indication information of the network device. Specifically, the terminal device receives reporting indication information transmitted by the network device, wherein the reporting indication information is used to instruct the terminal device to transmit identification information of a beam pair, which consists of a transmitting beam of the network device and a receiving beam of the terminal device, to the network device. After receiving the reporting indication information, the terminal device transmits the identification information of the beam pairs to the network device.

In embodiments of the present application, the terminal device not only reports information of an optimal receiving beam corresponding to transmitting beams through which better measurement signals are received, but also reports information of other receiving beams corresponding to the transmitting beams, and the reported information of beam pairs is more comprehensive, so that the network device can reasonably group beam pairs based on information of beam pairs reported by the terminal device.

Optionally, the terminal device may firstly sort the N beam pairs corresponding to each of the transmitting beams based on values of channel qualities in determining the K beam pairs, and then the terminal device determines the K beam pairs from the N beam pairs based on the result of the sorting.

The N beam pairs may be sorted in order of channel qualities from high to low, or in order of channel qualities from low to high. The terminal device may select the L beam pairs with the best channel qualities from all the beam pairs after the sorting is completed. For example, if a transmitting beam and all receiving beams form a total of 5 beam pairs, then the 5 beam pairs may be sorted in order of channel qualities from high to low, and then the first 3 beam pairs with better channel qualities are selected from the 5 beam pairs.

Optionally, in determining the above K beam pairs, the terminal device may determine the K beam pairs with channel qualities greater than a first threshold from the N beams. In this case, the terminal may not sort the beam pairs based on the channel qualities of the beam pairs, but directly compare the channel quality corresponding to each beam pair with the first threshold, and report information of the beam pairs with channel qualities greater than the first threshold. Of course, the terminal device can also sort the beam pairs based on the channel qualities of the beam pairs, and then compare the channel quality of each beam pair with the first threshold, and then report information of the beam pairs with channel qualities greater than the first threshold.

In determining the above K beam pairs, the terminal device may directly select a certain number of beam pairs from the N beam pairs based on the quality, or compare the channel qualities corresponding to the N beam pairs with a preset threshold. That is, the terminal device may only consider the number of K beam pairs, or may only consider the magnitude relationship between channel qualities of the beam pairs and the preset threshold. Certainly, the terminal device may also consider both the number and the relationship between the channel qualities corresponding to the beam pairs and the preset threshold in determining the K beam pairs.

The communication method in embodiments of the present application is described in detail below with reference to FIG. 6 as an example. In FIG. 6, there are a total of 4 transmitting beams (T1, T2, T3, and T4) and three receiving beams (R1, R2, and R3) and the transmitting beams and the receiving beams form a total of 12 beam pairs. The channel qualities corresponding to the beam pairs, which are composed of the transmitting beams T3 and T4 and their respective optimal receiving beams, are greater than the channel qualities corresponding to the beam pairs, which are composed of the transmitting beams T1 and T2 and their respective optimal receiving beams.

The terminal device determines the transmitting beams T3 and T4 from all the transmitting beams, and then determines to report the beam pairs corresponding to these two transmitting beams. Determining the beam pair of each of the transmitting beams is described in detail below by taking the transmitting beam T3 as an example.

The transmitting beam T3 corresponds to a total of 3 receiving beams. T3 and these 3 receiving beams form a total of 3 beam pairs. When determining the beam pairs to be reported from these 3 beam pairs, the channel qualities corresponding to these 3 beam pairs may be sorted in order of channel qualities from high to low, and the sorting result is shown as follows:
[T3 R1] 1
[T3 R2] 0.8
[T3 R3] 0.5

Next, the terminal device may select 2 beam pairs [T3 R1] and [T3 R2] from these 3 beam pairs to report (where the value of K is 2).

Alternatively, the terminal device may also select two beam pairs [T3 R1] and [T3 R2] with channel qualities greater than 0.5 from these 3 beam pairs to report.

Alternatively, the terminal device may also select 2 beam pairs [T3 R1] and [T3 R2] with better channel qualities from these 3 beam pairs, and then select a beam pair [T3 R1] with a channel quality greater than 0.9 from these 2 beam pairs to report. Alternatively, the terminal device firstly selects 2 beam pairs ([T3 R1] and [T3 R2]) with channel qualities greater than 0.5 from these 3 beam pairs, and then selects a beam pair [T3 R1] with a better channel quality from these 2 beam pairs to report.

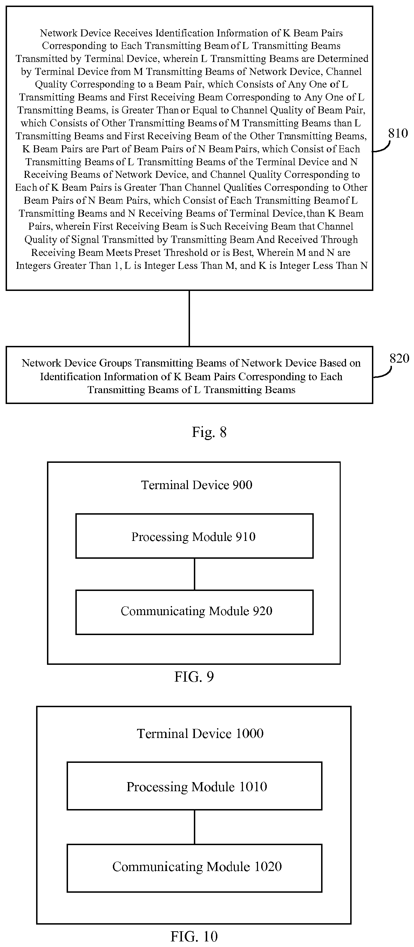

The communication method of the embodiments of the present application is described above in detail from the perspective of the terminal device with reference to FIG. 3 to FIG. 6. The communication method of the embodiments of the present application is described below from the perspective of the network device with reference to FIG. 7 and FIG. 8. It should be understood that the communication method of the embodiments of the present application described from the perspective of the network device in FIG. 7 and FIG. 8 corresponds to the communication method of the embodiments of the present application described from the perspective of the terminal device in FIG. 3 to FIG. 6. For brevity, repetitive description will be befittingly skipped below.

FIG. 7 is a schematic flow chart of a communication method of an embodiment of the present application. The method 700 of FIG. 7 comprises following steps.

At 710, a network device receives identification information of L beam pairs transmitted by a terminal device, wherein the L beam pairs are beam pairs determined by the terminal device from M×N beam pairs composed of M transmitting beams of the network device and N receiving beams of the terminal device, and wherein channel qualities corresponding to any one of the L beam pairs is greater than or equal to channel qualities corresponding to other beam pairs of the M×N beam pairs than the L beam pairs, wherein M and N are integers greater than 1, and L is an integer less than M×N;

At 720, the network device groups transmitting beams of the network device based on identification information of the L beam pairs.

In embodiments of the present application, the terminal device directly selects part of beam pairs with better channel qualities from all the beam pairs, and report identification information of this part of beam pairs to the network device, so that the network device can obtain the identification information of beam pairs with better channel qualities, and reasonably group the transmitting beams based on the identification information of this part of beam pairs.

Optionally, as an embodiment, grouping, by the network device, transmitting beams of the network device based on identification information of the L beam pairs comprises: determining, by the network device, a plurality of transmitting beams from the L beam pairs based on identification information of the L beam pairs; dividing, by the network device, transmitting beams of the plurality of transmitting beams corresponding to a same receiving beam into one group.

Optionally, as an embodiment, the method 700 of FIG. 7 further comprises: receiving, by the network device, information of channel qualities corresponding to the L beam pairs transmitted by the terminal device.

Optionally, as an embodiment, the method 700 of FIG. 7 further comprises: transmitting, by the network device, reporting indication information to the terminal device, wherein the reporting indication information is used to instruct the terminal device to transmit identification information of a beam pair composed of a transmitting beam and a receiving beam.

FIG. 8 is a schematic flow chart of a communication method of an embodiment of the present application. The method 800 of FIG. 8 comprises following steps:
At 810, a network device receives identification information of K beam pairs corresponding to each transmitting beam of L transmitting beams transmitted by a terminal device,
wherein the L transmitting beams are determined by the terminal device from M transmitting beams of the network device, channel quality corresponding to a beam pair composed of any one of the L transmitting beams and a first receiving beam corresponding to the any one of the transmitting beams is greater than or equal to channel quality of a beam pair composed of any one of other transmitting beams of the M transmitting beams than the L transmitting beams and a first receiving beam of the any one of other transmitting beams, the K beam pairs are part of N beam pairs composed of each transmitting beam of the L transmitting beams of the terminal device and N receiving beams of the network device, and channel quality corresponding to each of the K beam pairs is greater than channel qualities corresponding to other beam pairs of N beam pairs, which is composed of each transmitting beam of the L transmitting beams and N receiving beams of the terminal device, than the K beam pairs, wherein the first receiving beam is such a receiving beam that quality of a signal transmitted through a transmitting beam and received through the receiving beam meets a preset threshold or is the best, and wherein M and N are integers greater than 1, L is an integer less than M, and K is an integer less than N;
At 820, the network device groups transmitting beams of the network device based on identification information of K beam pairs corresponding to each transmitting beam of the L transmitting beams.

In embodiments of the present application, the terminal device not only reports identification information of an optimal receiving beam corresponding to transmitting beams through which better measurement signals are received, but also reports identification information of other receiving beams corresponding to the transmitting beams, and the reported information of beam pairs is more comprehensive, so that the network device can reasonably group beam pairs based on information of beam pairs reported by the terminal device.

Optionally, as an embodiment, grouping, by the network device, transmitting beams of the network device based on identification information of K beam pairs corresponding to each transmitting beam of the L transmitting beams comprises: dividing, by the network device, transmitting beams of the L transmitting beams corresponding to a same receiving beam into one group.

Optionally, as an embodiment, the method 800 of FIG. 8 further comprises: receiving, by the network device, information of channel qualities corresponding to the K beam pairs of each of transmitting beams transmitted by the terminal device.

Optionally, as an embodiment, the method 800 of FIG. 8 further comprises: transmitting, by the network device, reporting indication information to the terminal device, wherein the reporting indication information is used to instruct the terminal device to transmit identification information of a beam pair composed of the transmitting beam and the receiving beam.

The communication method of the embodiment of the present application is described in detail above with reference to FIG. 3 to FIG. 8. The terminal device and the network device of the embodiments of the present application will be described below with reference to FIG. 9 to FIG. 16.

It should be understood that the terminal device and the network device described in FIG. 9 to FIG. 16 can implement respective steps of the communication method described in FIG. 3 to FIG. 8. For brevity, repetitive description will be befittingly skipped below.

FIG. 9 is a schematic block diagram of a terminal device of an embodiment of the present application. The terminal device 900 of FIG. 9 comprises:
a processing module 910, configured to determine channel qualities corresponding to M×N beam pairs composed of M transmitting beams of a network device and N receiving beams of the terminal device 900;
wherein the processing module 910 is further configured to determine L beam pairs from the M×N beam pairs, wherein channel quality corresponding to any one of the L beam pairs is greater than or equal to channel qualities corresponding to other beam pairs of the M×N beam pairs than the L beam pairs, wherein M and N are integers greater than 1, and L is an integer less than M×N;
a communicating module 920, configured to transmit identification information of the L beam pairs to the network device.

Optionally, as an embodiment, the processing module 910 is specifically configured to: sort the M×N beam pairs based on values of channel qualities; determine the L beam pairs from the M×N beam pairs based on a result of the sorting.

Optionally, as an embodiment, the processing module 910 is specifically configured to: determine the L beam pairs with channel qualities greater than a first threshold from the M×N beam pairs.

Optionally, as an embodiment, the communicating module 920 is further configured to transmit information of channel qualities corresponding to the L beam pairs to the network device.

Optionally, as an embodiment, the communicating module 920 is further configured to: receive reporting indication information transmitted by the network device, wherein the reporting indication information is used to instruct the terminal device 900 to transmit identification information of a beam pair composed of a transmitting beam of the network device and a receiving beam of the terminal device 900 to the network device.

FIG. 10 is a schematic block diagram of a terminal device of an embodiment of the present application. The terminal device 1000 of FIG. 10 comprises:
a processing module 1010, configured to determine L transmitting beams from M transmitting beams of a network device, wherein channel quality corresponding to a beam pair composed of any one of the transmitting beams of the L transmitting beams and a first receiving beam corresponding to the any one of the transmitting beams is greater than or equal to channel quality of a beam pair composed of any one of other transmitting beams of the M transmitting beams than the L transmitting beams and a first receiving beam of the any one of other transmitting beams, wherein the first receiving beam is such a receiving beam that quality of a signal transmitted through a transmitting beam and received through the receiving beam meets a preset threshold or is the best;
the processing module 1010 is further configured to determine K beam pairs from N beam pairs composed of each transmitting beam of the L transmitting beams and N receiving beams, wherein channel qualities corresponding to the K beam pairs are greater than channel qualities corresponding to other beam pairs of the N beam pairs than the K beam pairs, wherein M and N are integers greater than 1, L is an integer less than M, and K is an integer less than N;
a communicating module 1020, configured to transmit identification information of the K beam pairs corresponding to each transmitting beam to the network device.

Optionally, as an embodiment, the processing module 1010 is specifically configured to: sort the N beam pairs based on values of channel qualities; determine the K beam pairs from the N beam pairs based on a result of the sorting.

Optionally, as an embodiment, the processing module 1010 is specifically configured to: determine the K beam pairs with channel qualities greater than a first threshold from the N beam pairs.

Optionally, as an embodiment, the processing module 1010 is specifically configured to: sort the N beam pairs based on values of channel qualities; select the K beam pairs from the N beam pairs, wherein channel quality corresponding to each of the K beam pairs is greater than a second threshold, and K is less than or equal to a preset first value, wherein the first value is an integer less than N.

Optionally, as an embodiment, the communicating module 1020 is further configured to: transmit information of channel qualities corresponding to the K beam pairs of the each transmitting beam to the network device.

Optionally, as an embodiment, the communicating module 1020 is further configured to: receive reporting indication information transmitted by the network device, wherein the reporting indication information is used to instruct the terminal device 1000 to report identification information of a beam pair composed of the transmitting beam and the receiving beam.

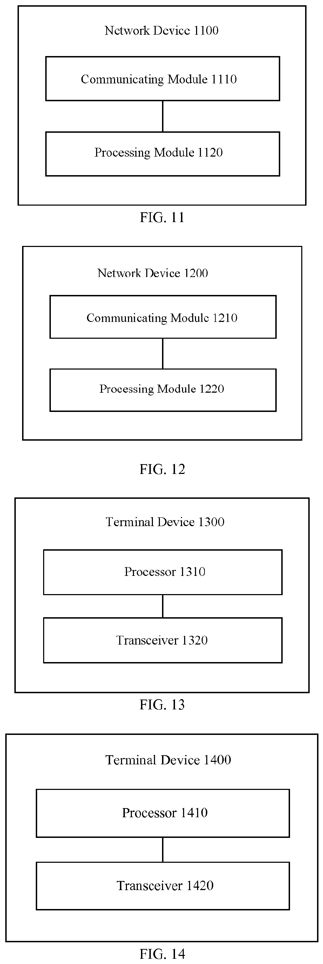

FIG. 11 is a schematic block diagram of a network device of an embodiment of the present application. The network device 1100 of FIG. 11 comprises:
a communicating module 1110, configured to receive identification information of L beam pairs transmitted by a terminal device,
wherein the L beam pairs are determined by the terminal device from M×N beam pairs composed of M transmitting beams of the network device 1100 and N receiving beams of the terminal device, and channel quality corresponding to any one of the L beam pairs is greater than or equal to channel qualities corresponding to other beam pairs of the M×N beam pairs than the L beam pairs, wherein M and N are integers greater than 1, and L is an integer less than M×N;
a processing module 1120, configured to group transmitting beams of the network device 1100 based on identification information of the L beam pairs.

Optionally, as an embodiment, the processing module 1120 is specifically configured to: determine a plurality of transmitting beams from the L beam pairs based on identification information of the L beam pairs; dividing transmitting beams of the plurality of transmitting beams corresponding to a same receiving beam into one group.

Optionally, as an embodiment, the communicating module 1110 is further configured to transmit information of channel qualities corresponding to the L beam pairs transmitted by the terminal device.

Optionally, as an embodiment, the communicating module 1110 is further configured to transmit reporting indication information to the terminal device, wherein the reporting indication information is used to instruct the terminal device to transmit identification information of a beam pair composed of a transmitting beam and a receiving beam to the network device 1100.
FIG. 12 is a schematic block diagram of a network device of an embodiment of the present application. The network device 1200 of FIG. 12 comprises:
a communicating module 1210, configured to receive identification information of K beam pairs corresponding to each transmitting beam of L transmitting beams transmitted by a terminal device,
wherein the L transmitting beams are determined by the terminal device from M transmitting beams of the network device 1200, channel quality corresponding to a beam pair composed of any one of the L transmitting beams and a first receiving beam corresponding to the any one of the transmitting beams is greater than or equal to channel quality of a beam pair composed of any one of other transmitting beams of the M transmitting beams than the L transmitting beams and a first receiving beam of the any one of other transmitting beams, the K beam pairs are part of N beam pairs composed of each transmitting beam of the L transmitting beams of the terminal device and N receiving beams of the network device 1200, and channel quality corresponding to each of the K beam pairs is greater than channel qualities corresponding to other beam pairs of N beam pairs, which is composed of each transmitting beam of the L transmitting beams and N receiving beams of the terminal device, than the K beam pairs, wherein the first receiving beam is such a receiving beam that quality of a signal transmitted through a transmitting beam and received through the receiving beam meets a preset threshold or is the best,
M and N are integers greater than 1, L is an integer less than M, and K is an integer less than N;
a processing module 1220, configured to group transmitting beams of the network device 1200 based on identification information of K beam pairs corresponding to each transmitting beam of the L transmitting beams.

Optionally, as an embodiment, the processing module 1220 is specifically configured to: divide transmitting beams of the L transmitting beams corresponding to a same receiving beam into one group.

Optionally, as an embodiment, the communicating module 1210 is further configured to receive information of channel qualities corresponding to the K beam pairs of the each transmitting beam transmitted by the terminal device.

Optionally, as an embodiment, the communicating module 1210 is further configured to transmit reporting indication information to the terminal device, wherein the reporting indication information is used to instruct the terminal device to transmit identification information of a beam pair composed of the transmitting beam and the receiving beam to the network device 1200.

FIG. 13 is a schematic block diagram of a terminal device of an embodiment of the present application. The terminal device 1300 of FIG. 13 comprises:
a processor 1310, configured to determine channel qualities corresponding to M×N beam pairs composed of M transmitting beams of a network device and N receiving beams of the terminal device 1300;
wherein the processor is further configured to determine L beam pairs from the M×N beam pairs, wherein channel quality corresponding to any one of the L beam pairs is greater than or equal to channel qualities corresponding to other beam pairs of the M×N beam pairs than the L beam pairs, wherein M and N are integers greater than 1, and L is an integer less than M×N;
a transceiver 1320, configured to transmit identification information of the L beam pairs to the network device.

Optionally, as an embodiment, the processor 1310 is specifically configured to: sort the M×N beam pairs based on values of channel qualities; determine the L beam pairs from the M×N beam pairs based on a result of the sorting.

Optionally, as an embodiment, the processor 1310 is specifically configured to: determine the L beam pairs with channel qualities greater than a first threshold from the M×N beam pairs.

Optionally, as an embodiment, the transceiver 1320 is further configured to transmit information of channel qualities corresponding to the L beam pairs to the network device.

Optionally, as an embodiment, the transceiver 1320 is further configured to: receive reporting indication information transmitted by the network device, wherein the reporting indication information is used to instruct the terminal device 1300 to transmit identification information of a beam pair composed of a transmitting beam of the network device and a receiving beam of the terminal device 1300 to the network device.

FIG. 14 is a schematic block diagram of a terminal device of an embodiment of the present application. The terminal device 1400 of FIG. 14 comprises:
a processor 1410, configured to determine L transmitting beams from M transmitting beams of a network device, wherein channel quality corresponding to a beam pair composed of any one of the transmitting beams of the L transmitting beams and a first receiving beam corresponding to the any one of the transmitting beams is greater than or equal to channel quality of a beam pair composed of any one of other transmitting beams of the M transmitting beams than the L transmitting beams and a first receiving beam of the any one of other transmitting beams, wherein the first receiving beam is such a receiving beam that quality of a signal transmitted through a transmitting beam and received through the receiving beam meets a preset threshold or is the best;
the processor 1410 is further configured to determine K beam pairs from N beam pairs composed of each transmitting beam of the L transmitting beams and N receiving beams, wherein channel qualities corresponding to the K beam pairs are greater than channel qualities corresponding to other beam pairs of the N beam pairs than the K beam pairs, wherein M and N are integers greater than 1, L is an integer less than M, and K is an integer less than N;
a transceiver 1420, configured to transmit identification information of the K beam pairs corresponding to the each transmitting beam to the network device.

Optionally, as an embodiment, the processor 1410 is specifically configured to: sort the N beam pairs based on values of channel qualities; determine the K beam pairs from the N beam pairs based on a result of the sorting.

Optionally, as an embodiment, the processor 1410 is specifically configured to: determine the K beam pairs with channel qualities greater than a first threshold from the N beam pairs.

Optionally, as an embodiment, the processor 1410 is specifically configured to: sort the N beam pairs based on values of channel qualities; select the K beam pairs from the N beam pairs, wherein channel quality corresponding to each of the K beam pairs is greater than a second threshold, and K is less than or equal to a preset first value, wherein the first value is an integer less than N.

Optionally, as an embodiment, the transceiver 1420 is further configured to transmit information of channel qualities corresponding to the K beam pairs of the each transmitting beam to the network device.

Optionally, as an embodiment, the transceiver 1420 is further configured to receive reporting indication information transmitted by the network device, wherein the reporting indication information is used to instruct the terminal device 1400 to report identification information of a beam pair composed of the transmitting beam and the receiving beam.

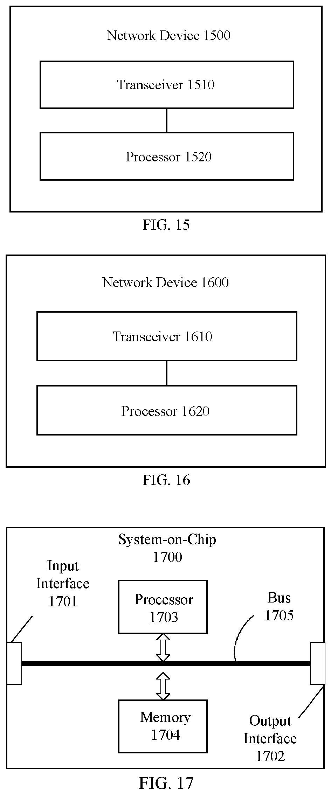

FIG. 15 is a schematic block diagram of a network device of an embodiment of the present application. The network device 1500 of FIG. 15 comprises:
a transceiver 1510, configured to receive identification information of L beam pairs transmitted by a terminal device,
wherein the L beam pairs are determined by the terminal device from M×N beam pairs composed of M transmitting beams of the network device 1500 and N receiving beams of the terminal device, and channel quality corresponding to any one of the L beam pairs is greater than or equal to channel qualities corresponding to other beam pairs of the M×N beam pairs than the L beam pairs, wherein M and N are integers greater than 1, and L is an integer less than M×N;
a processor 1520, configured to group transmitting beams of the network device 1500 based on identification information of the L beam pairs.

Optionally, as an embodiment, the processor 1520 is specifically configured to: determine a plurality of transmitting beams from the L beam pairs based on identification information of the L beam pairs; dividing transmitting beams of the plurality of transmitting beams corresponding to a same receiving beam into one group.

Optionally, as an embodiment, the transceiver 1510 is further configured to transmit information of channel qualities corresponding to the L beam pairs transmitted by the terminal device.

Optionally, as an embodiment, the transceiver 1510 is further configured to transmit reporting indication information to the terminal device, wherein the reporting indication information is used to instruct the terminal device to transmit identification information of a beam pair composed of a transmitting beam and a receiving beam to the network device 1500.

FIG. 16 is a schematic block diagram of a network device of an embodiment of the present application. The network device 1600 of FIG. 16 comprises:
a transceiver 1610 configured to receive identification information of K beam pairs corresponding to each transmitting beam of L transmitting beams transmitted by a terminal device,
wherein the L transmitting beams are determined by the terminal device from M transmitting beams of the network device 1600, channel quality corresponding to a beam pair composed of any one of the L transmitting beams and a first receiving beam corresponding to the any one of the transmitting beams is greater than or equal to channel quality of a beam pair composed of any one of other transmitting beams of the M transmitting beams than the L transmitting beams and a first receiving beam of the any one of other transmitting beams, the K beam pairs are part of N beam pairs composed of each transmitting beam of the L transmitting beams of the terminal device and N receiving beams of the network device 1600, and channel quality corresponding to each of the K beam pairs is greater than channel qualities corresponding to other beam pairs of N beam pairs, which is composed of each transmitting beam of the L transmitting beams and N receiving beams of the terminal device, than the K beam pairs, wherein the first receiving beam is such a receiving beam that quality of a signal transmitted through a transmitting beam and received through the receiving beam meets a preset threshold or is the best, and wherein M and N are integers greater than 1, L is an integer less than M, and K is an integer less than N;
a processor 1620, configured to group transmitting beams of the network device 1600 based on identification information of K beam pairs corresponding to each transmitting beam of the L transmitting beams.

Optionally, as an embodiment, the processor 1620 is specifically configured to: divide transmitting beams of the L transmitting beams corresponding to a same receiving beam into one group.

Optionally, as an embodiment, the transceiver 1610 is further configured to receive information of channel qualities corresponding to the K beam pairs of the each transmitting beam transmitted by the terminal device.

Optionally, as an embodiment, the transceiver 1610 is further configured to transmit reporting indication information to the terminal device, wherein the reporting indication information is used to instruct the terminal device to transmit identification information of a beam pair composed of a transmitting beam and a receiving beam to the network device 1600.

FIG. 17 is a schematic structure diagram of a system-on-chip of an embodiment of the present application. The system-on-chip 1700 of FIG. 17 comprises an input interface 1701, an output interface 1702, wherein the processor 1703 and the memory 1704 are connected via a bus 1705, and the processor 1703 is configured to execute a code in the memory 1704.

Optionally, the processor 1703 implements, when the code is executed, methods in method embodiments of the present application implemented by a terminal device. For brevity, it will not be covered again herein.

Optionally, the processor 1703 implements, when the code is executed, methods in method embodiments implemented by a network device. For brevity, it will not be covered again herein.

It may be appreciated by an ordinary person skilled in the art that various units and algorithm steps of various examples described in conjunction with the embodiments disclosed herein may be implemented in electronic hardware, or a combination of electronic hardware and computer software. Whether these functions are implemented in hardware or software depends on specific applications and design constraints of technical solutions. A person skilled in the art may implement the described functions with different methods for each of specific applications, but such implementations shall not be regarded as going beyond the scope of the present application.

A person skilled in the art may clearly understand that for the sake of convenience and conciseness in description, corresponding processes in the forgoing method embodiments can be referenced for the specific work processes of the systems, devices and units described in the above, which are not further described herein.

In several embodiments provided by the present application, it should be understood that the disclosed systems, devices and methods may be implemented by other means. For example, the embodiments of devices described above are merely schematic. For example, the partitioning of the units may be a partitioning in logical functions. There may be other manners for partitioning in actual implementation. For example, a plurality of units or components may be combined together or integrated into another system, or some features may be omitted or not be executed. In addition, mutual couplings or direct couplings or communication connections that are shown or discussed may be indirect couplings or communication connections through some interfaces, devices or units, and may be in electrical, mechanical or other forms.

The units described as separated components may be or may not be physically separated. The components shown as units may be or may not be physical units, that is, they may be located in one place or may be distributed on a plurality of network units. Part or all of the units may be selected according to actual needs to achieve the purposes of the solutions of the embodiments of the present application.

In addition, functional units in the embodiments of the present application may be integrated into one processing unit, or each unit exists independently in physics, or two or more units may be integrated into one unit.

The functional units, if implemented in the form of the software functional unit and sold or used as a standalone product, may be stored in a computer-readable storage medium. Based on such an understanding, the technical solution of the present application in essence, or the part that contributes to the prior art, or all or part of the technical solution, may be embodied in the form of a software product. The computer software product is stored in a storage medium and includes a plurality of instructions for a computer device (which may be a personal computer, a server, a network device or the like) to execute all or part of the steps of the method described in the embodiments of the present application. The foregoing storage medium includes various media that may store program codes, such as a USB flash disk, a mobile hard disk, a read-only memory (ROM), a random access memory (RAM), a magnetic disk, an optical disk, or the like.

The above description is merely a specific implementation mode of the present application, but the scope of protection of the present application is not limited to this. Any modification or replacement that would be readily conceived by any person skilled in the art within the scope of the technology disclosed in the present application should be within the scope of protection of the present application. Therefore, the scope of protection of the present application shall be defined by the claims.

## Claims

1. A communication method, comprising:
determining (310), by a terminal device (120), channel qualities corresponding to M×N beam pairs composed of M transmitting beams of a network device (110) and N receiving beams of the terminal device (120);
determining (320), by the terminal device (120), L beam pairs from the M×N beam pairs, wherein channel quality corresponding to any one beam pair of the L beam pairs is greater than or equal to channel qualities corresponding to other beam pairs of the M×N beam pairs than the L beam pairs, wherein M and N are integers greater than 1, and L is an integer less than M×N;
transmitting (330), by the terminal device (120), identification information of the L beam pairs to the network device (110);
wherein determining (320), by the terminal device (120), L beam pairs from the M×N beam pairs comprises:
sorting, by the terminal device (120), the M×N beam pairs based on values of channel qualities;
determining, by the terminal device (120), the L beam pairs from the M×N beam pairs based on a result of the sorting;
wherein the method further comprises:
transmitting, by the terminal device (120), information of channel qualities corresponding to the L beam pairs to the network device (110), wherein channel qualities of the L beam pairs are greater than a first threshold.

2. The method according to claim 1, further comprising:
receiving, by the terminal device (120), reporting indication information transmitted by the network device (110), wherein the reporting indication information is used to instruct the terminal device (120) to transmit identification information of a beam pair composed of a transmitting beam of the network device (110) and a receiving beam of the terminal device (120) to the network device (110).

3. A communication method, comprising:
determining (510), by a terminal device (120), L transmitting beams from M transmitting beams of a network device (110), wherein channel quality corresponding to a beam pair composed of any one of the transmitting beams of the L transmitting beams and a first receiving beam corresponding to the any one of the transmitting beams is greater than or
equal to channel quality of a beam pair composed of any one of other transmitting beams of the M transmitting beams than the L transmitting beams and a first receiving beam of the any one of other transmitting beams, wherein the first receiving beam is such a receiving beam that quality of a signal transmitted through a transmitting beam and received through the receiving beam meets a preset threshold or is the best;
determining (520), by the terminal device (120), K beam pairs from N beam pairs composed of each transmitting beam of the L transmitting beams and N receiving beams, wherein channel qualities corresponding to the K beam pairs are greater than channel qualities corresponding to other beam pairs of the N beam pairs than the K beam pairs, wherein M and N are integers greater than 1, L is an integer less than M, and K is an integer less than N;
transmitting (530), by the terminal device (120), identification information of the K beam pairs corresponding to the each transmitting beam to the network device (110);
wherein determining (520), by the terminal device (120), K beam pairs from N beam pairs composed of each transmitting beam of the L transmitting beams and N receiving beams comprises:
sorting, by the terminal device (120), the N beam pairs based on values of channel qualities;
determining, by the terminal device (120), the K beam pairs from the N beam pairs based on a result of the sorting; wherein the method further comprises:
transmitting, by the terminal device (120), information of channel qualities corresponding to the K beam pairs corresponding to the each transmitting beam, wherein the channel qualities corresponding to the K beam pairs are greater than a first threshold.

4. The method according to claim 3, further comprising:
receiving, by the terminal device (120), reporting indication information transmitted by the network device (110), wherein the reporting indication information is used to instruct the terminal device (120) to report identification information of a beam pair composed of the transmitting beam and the receiving beam.

5. A communication method, comprising:
receiving (710), by a network device (110), identification information of L beam pairs transmitted by a terminal device (120),
wherein the L beam pairs are determined by the terminal device (120) from M×N beam pairs composed of M transmitting beams of the network device (110) and N receiving beams of the terminal device (120), and channel quality corresponding to any one of the L beam pairs is greater than or equal to channel qualities corresponding to other beam pairs of the M×N beam pairs than the L beam pairs, wherein M and N are integers greater than 1, and L is an integer less than M×N;
grouping (720), by the network device (110), transmitting beams of the network device (110) based on identification information of the L beam pairs;
wherein the M×N beam pairs are sorted based on values of channel qualities, and the L beam pairs from are determined from the M×N beam pairs based on a result of the sorting;
wherein the method further comprises:
receiving information of channel qualities corresponding to the L beam pairs, wherein channel qualities of the L beam pairs are greater than a first threshold.

6. A communication method, comprising:
receiving (810), by a network device (110), identification information of K beam pairs corresponding to each transmitting beam of L transmitting beams transmitted by a terminal device (120),
wherein the L transmitting beams are determined by the terminal device (120) from M transmitting beams of the network device (110), channel quality corresponding to a beam pair composed of any one of the L transmitting beams and a first receiving beam corresponding to the any one of the transmitting beams is greater than or equal to channel quality of a beam pair composed of any one of other transmitting beams of the M transmitting beams than the L transmitting beams and a first receiving beam of the any one of other transmitting beams, the K beam pairs are part of N beam pairs composed of each transmitting beam of the L transmitting beams of the terminal device (120) and N receiving beams of the network device (110), and channel quality corresponding to each of the K beam pairs is greater than channel qualities corresponding to other beam pairs of N beam pairs, which is composed of each transmitting beam of the L transmitting beams and N receiving beams of the terminal device, than the K beam pairs, wherein the first receiving beam is such a receiving beam that quality of a signal transmitted through a transmitting beam and received through the receiving beam meets a preset threshold or is the best, and wherein M and N are integers greater than 1, L is an integer less than M, and K is an integer less than N;
grouping (820), by the network device (110), transmitting beams of the network device based on identification information of K beam pairs corresponding to each transmitting beam of the L transmitting beams;
wherein the N beam pairs are sorted based on values of channel qualities, and the K beam pairs are determined from the N beam pairs based on a result of the sorting;
wherein the method further comprises:
receiving information of channel qualities corresponding to the K beam pairs corresponding to the each transmitting beam, wherein the channel qualities corresponding to the K beam pairs are greater than a first threshold.

7. A terminal device comprising a processing module and a communicating module, wherein the processing module and the communicating module are configured to perform a method of any one of claims 1 to 2.

8. A terminal device comprising a processing module and a communicating module, wherein the processing module and the communicating module are configured to perform a method of any one of claims 3 to 4.

## Patentansprüche

1. Kommunikationsverfahren, umfassend:
Bestimmen (310), durch eine Endgerätevorrichtung (120), von Kanalqualitäten, die MxN Strahlenpaaren entsprechen, die aus M Übertragungsstrahlen einer Netzwerkvorrichtung (110) und N Empfangsstrahlen der Endgerätevorrichtung (120) zusammengesetzt sind;
Bestimmen (320), durch die Endgerätevorrichtung (120), von L Strahlenpaaren aus den MxN Strahlenpaaren, wobei die Kanalqualität, die irgendeinem Strahlenpaar der L Strahlenpaare entspricht, größer oder gleich den Kanalqualitäten ist, die anderen Strahlenpaaren der MxN Strahlenpaare als den L Strahlenpaaren entspricht, wobei M und N ganze Zahlen größer als 1 sind, und L eine ganze Zahl kleiner als MxN ist;
Übertragen (330), durch die Endgerätevorrichtung (120), von Identifikationsinformationen der L Strahlpaare an die Netzwerkvorrichtung (110);
wobei das Bestimmen (320) von L Strahlenpaaren aus den MxN Strahlenpaaren durch die Endgerätevorrichtung (120) umfasst:
Sortieren der MxN Strahlpaare durch die Endgerätevorrichtung (120) basierend auf den Werten der Kanalqualitäten;
Bestimmen, durch die Endgerätevorrichtung (120), der L Strahlpaare aus den MxN Strahlpaaren, basierend auf einem Ergebnis des Sortierens;
wobei das Verfahren ferner umfasst:
Übertragen, durch die Endgerätevorrichtung (120), von Informationen über Kanalqualitäten, die den L Strahlpaaren entsprechen, zu der Netzwerkvorrichtung (110), wobei die Kanalqualitäten der L Strahlpaare größer als ein erster Schwellenwert sind.

2. Verfahren nach Anspruch 1, ferner umfassend:
Empfangen von durch die Netzwerkvorrichtung (110) übertragenen Berichtsangabeinformationen durch die Endgerätvorrichtung (120), wobei die Berichtsangabeinformationen dazu verwendet werden, die Endgerätvorrichtung (120) anzuweisen,
Identifikationsinformationen eines Strahlpaares, das aus einem Übertragungsstrahl der Netzwerkvorrichtung (110) und einem Empfangsstrahl der Endgerätvorrichtung (120) zusammengesetzt ist, an die Netzwerkvorrichtung (110) zu übertragen.

3. Kommunikationsverfahren, umfassend:
Bestimmen (510), durch eine Endgerätvorrichtung (120), von L Übertragungsstrahlen aus M Übertragungsstrahlen einer Netzwerkvorrichtung (110), wobei die Kanalqualität, die einem Strahlenpaar entspricht, das aus einem beliebigen der Übertragungsstrahlen der L Übertragungsstrahlen und einem ersten Empfangsstrahl, der dem beliebigen der Übertragungsstrahlen entspricht, zusammengesetzt ist, größer oder gleich der Kanalqualität eines Strahlenpaares ist, das aus einem beliebigen der anderen Übertragungsstrahlen der M Übertragungsstrahlen zusammengesetzt ist, als die L Übertragungsstrahlen und ein erster Empfangsstrahl des beliebigen der anderen Übertragungsstrahlen, wobei der erste Empfangsstrahl ein solcher Empfangsstrahl ist, dass die Qualität eines durch einen Übertragungsstrahl übertragenen und durch den Empfangsstrahl empfangenen Signals einen voreingestellten Schwellenwert erfüllt oder die beste ist;
Bestimmen (520), durch die Endgerätevorrichtung (120), von K Strahlenpaaren aus N Strahlenpaaren, die aus jedem Übertragungsstrahl der L Übertragungsstrahlen und N Empfangsstrahlen zusammengesetzt sind, wobei Kanalqualitäten, die den K Strahlenpaaren entsprechen, größer sind als Kanalqualitäten, die anderen Strahlenpaaren der N Strahlenpaare als den K Strahlenpaaren entsprechen, wobei M und N ganze Zahlen größer als 1 sind, L eine ganze Zahl kleiner als M ist und K eine ganze Zahl kleiner als N ist;
Übertragen (530), durch die Endgerätevorrichtung (120), von Identifikationsinformationen der K Strahlpaare, die jedem Übertragungsstrahl entsprechen, an die Netzwerkvorrichtung (110);
wobei das Bestimmen (520) durch die Endgerätevorrichtung (120) von K Strahlenpaaren aus N Strahlenpaaren, die aus jedem Übertragungsstrahl der L Übertragungsstrahlen und
N Empfangsstrahlen zusammengesetzt sind, umfasst:
Sortieren der N Strahlpaare durch die Endgerätevorrichtung (120) basierend auf den Werten der Kanalqualitäten;
Bestimmen, durch die Endgerätevorrichtung (120), der K Strahlpaare aus den N Strahlpaaren, basierend auf einem Ergebnis des Sortierens;
wobei das Verfahren ferner umfasst:
Übertragen, durch die Endgerätevorrichtung (120), von Informationen von Kanalqualitäten, die den K Strahlenpaaren entsprechen, die jedem Übertragungsstrahl entsprechen, wobei die Kanalqualitäten, die den K Strahlenpaaren entsprechen, größer als ein erster Schwellenwert sind.

4. Verfahren nach Anspruch 3, ferner umfassend:
Empfangen von durch die Netzwerkvorrichtung (110) übertragenen Berichtsangabeinformationen durch die Endgerätevorrichtung (120), wobei die Berichtsangabeinformationen dazu verwendet werden, die Endgerätevorrichtung (120) anzuweisen,
Identifikationsinformationen eines aus dem Übertragungsstrahl und dem Empfangsstrahl zusammengesetzten Strahlpaares zu berichten.

5. Kommunikationsverfahren, umfassend:
Empfangen (710), durch eine Netzwerkvorrichtung (110), von Identifikationsinformationen von L Strahlpaaren, die durch eine Endgerätevorrichtung (120) übertragen wurden, wobei die L Strahlenpaare durch die Endgerätevorrichtung (120) aus MxN Strahlenpaaren bestimmt werden, die aus M Übertragungsstrahlen der Netzwerkvorrichtung (110) und N Empfangsstrahlen der Endgerätevorrichtung (120) zusammengesetzt sind, und die Kanalqualität, die irgendeinem der L Strahlenpaare entspricht, größer oder gleich der Kanalqualität ist, die anderen Strahlenpaaren der MxN Strahlenpaare als den L Strahlenpaaren entspricht, wobei M und N ganze Zahlen größer als 1 sind, und L eine ganze Zahl kleiner als MxN ist;
Gruppieren (720), durch die Netzwerkvorrichtung (110), von Übertragungsstrahlen der Netzwerkvorrichtung (110) basierend auf Identifikationsinformationen der L Strahlenpaare;
wobei die MxN Strahlpaare basierend auf Werten von Kanalqualitäten sortiert werden, und die L Strahlpaare aus den MxN Strahlpaaren basierend auf einem Ergebnis des Sortierens bestimmt werden;
wobei das Verfahren ferner umfasst:
Empfangen von Informationen über Kanalqualitäten, die den L Strahlpaaren entsprechen, wobei die Kanalqualitäten der L Strahlpaare größer als ein erster Schwellenwert sind.

6. Kommunikationsverfahren, umfassend:
Empfangen (810), durch eine Netzwerkvorrichtung (110), von Identifikationsinformationen von K Strahlenpaaren, die jedem Übertragungsstrahl von L Übertragungsstrahlen entsprechen, die durch eine Endgerätevorrichtung (120) übertragen werden,
wobei die L Übertragungsstrahlen durch die Endgerätvorrichtung (120) aus M Übertragungsstrahlen der Netzwerkvorrichtung (110) bestimmt werden, die Kanalqualität, die einem Strahlenpaar entspricht, das aus einem beliebigen der L Übertragungsstrahlen und einem ersten Empfangsstrahl, der dem beliebigen der Übertragungsstrahlen entspricht, zusammengesetzt ist, größer oder gleich der Kanalqualität eines Strahlenpaares ist, das aus einem beliebigen der anderen Übertragungsstrahlen der M Übertragungsstrahlen zusammengesetzt ist, als die L Übertragungsstrahlen und ein erster Empfangsstrahl des beliebigen der anderen Übertragungsstrahlen, die K Strahlenpaare Teil von N Strahlenpaaren sind, die durch jeden Übertragungsstrahl der L Übertragungsstrahlen der Endgerätevorrichtung (120) und N Empfangsstrahlen der Netzwerkvorrichtung (110) zusammengesetzt sind und die Kanalqualität, die jedem der K Strahlenpaare entspricht, größer ist als die Kanalqualitäten, die anderen Strahlenpaaren von N Strahlenpaaren entsprechen, die aus jedem Übertragungsstrahl der L Übertragungsstrahlen und N Empfangsstrahlen der Endgerätevorrichtung zusammengesetzt sind, wobei der erste Empfangsstrahl ein solcher Empfangsstrahl ist, dass die Qualität eines durch einen Übertragungsstrahl übertragenen und durch den Empfangsstrahl empfangenen Signals einen voreingestellten Schwellenwert erfüllt oder die beste ist, und wobei M und N ganze Zahlen größer als 1 sind, L eine ganze Zahl kleiner als M ist und K eine ganze Zahl kleiner als N ist;
Gruppieren (820), durch die Netzwerkvorrichtung (110), von Übertragungsstrahlen der Netzwerkvorrichtung basierend auf Identifikationsinformationen von K Strahlenpaaren, die jedem Übertragungsstrahl der L Übertragungsstrahlen entsprechen;
wobei die N Strahlenpaare basierend auf Werten von Kanalqualitäten sortiert werden, und die K Strahlenpaare aus den N Strahlenpaaren basierend auf einem Ergebnis des Sortierens bestimmt werden;
wobei das Verfahren ferner umfasst:
Empfangen von Informationen über Kanalqualitäten, die den K Strahlenpaaren entsprechen, die jedem Übertragungsstrahl entsprechen, wobei die Kanalqualitäten, die den K Strahlenpaaren entsprechen, größer als ein erster Schwellenwert sind.

7. Endgerätevorrichtung, umfassend ein Verarbeitungsmodul und ein Kommunikationsmodul, wobei das Verarbeitungsmodul und das Kommunikationsmodul dazu ausgelegt sind, ein Verfahren nach einem der Ansprüche 1 bis 2 durchzuführen.

8. Endgerätevorrichtung, umfassend ein Verarbeitungsmodul und ein Kommunikationsmodul, wobei das Verarbeitungsmodul und das Kommunikationsmodul dazu ausgelegt sind, ein Verfahren nach einem der Ansprüche 3 bis 4 durchzuführen.

## Revendications

1. Procédé de communication, comprenant :
la détermination (310), par un dispositif terminal (120), de qualités de canal correspondant à M×N paires de faisceaux composées de M faisceaux d'émission d'un dispositif de réseau (110) et de N faisceaux de réception du dispositif terminal (120) ;
la détermination (320), par le dispositif terminal (120), de L paires de faisceaux parmi les M×N paires de faisceaux, dans lequel la qualité de canal correspondant à une paire de faisceaux quelconque des L paires de faisceaux est supérieure ou égale à des qualités de canal correspondant à d'autres paires de faisceaux des M×N paires de faisceaux que les L paires de faisceaux, dans lequel M et N sont des entiers supérieurs à 1, et L est un entier inférieur à M×N ;
la transmission (330) au dispositif de réseau (110), par le dispositif terminal (120), d'informations d'identification des L paires de faisceaux ;
dans lequel la détermination (320), par le dispositif terminal (120), de L paires de faisceaux parmi les M×N paires de faisceaux comprend :
le tri, par le dispositif terminal (120), des M×N paires de faisceaux sur la base de valeurs de qualités de canal ;
la détermination, par le dispositif terminal (120), des L paires de faisceaux parmi les M×N paires de faisceaux sur la base d'un résultat du tri ;
dans lequel le procédé comprend en outre :
la transmission au dispositif de réseau (110), par le dispositif terminal (120), d'informations de qualités de canal correspondant aux L paires de faisceaux, dans lequel les qualités de canal des L paires de faisceaux sont supérieures à un premier seuil.

2. Procédé selon la revendication 1, comprenant en outre :
la réception, par le dispositif terminal (120), d'informations d'indication de rapport transmises par le dispositif de réseau (110), dans lequel les informations d'indication de rapport sont utilisées pour ordonner au dispositif terminal (120) de transmettre au dispositif de réseau (110) des informations d'identification d'une paire de faisceaux composée d'un faisceau d'émission du dispositif de réseau (110) et d'un faisceau de réception du dispositif terminal (120).

3. Procédé de communication, comprenant :
la détermination (510), par un dispositif terminal (120), de L faisceaux d'émission parmi M faisceaux d'émission d'un dispositif de réseau (110), dans lequel la qualité de canal correspondant à une paire de faisceaux composée de l'un quelconque des faisceaux d'émission des L faisceaux d'émission et d'un premier faisceau de réception correspondant audit un quelconque des faisceaux d'émission est supérieure ou égale à la qualité de canal d'une paire de faisceaux composée de l'un quelconque d'autres faisceaux d'émission des M faisceaux d'émission que les L faisceaux d'émission et d'un premier faisceau de réception dudit un quelconque d'autres faisceaux d'émission, dans lequel le premier faisceau de réception est un faisceau de réception tel que la qualité d'un signal émis par l'intermédiaire d'un faisceau d'émission et reçu par l'intermédiaire du faisceau de réception satisfait à un seuil prédéfini ou est la meilleure ;
la détermination (520), par le dispositif terminal (120), de K paires de faisceaux parmi N paires de faisceaux composées de chaque faisceau d'émission des L faisceaux d'émission et de N faisceaux de réception, dans lequel des qualités de canal correspondant aux K paires de faisceaux sont supérieures à des qualités de canal correspondant à d'autres paires de faisceaux des N paires de faisceaux que les K paires de faisceaux, dans lequel M et N sont des entiers supérieurs à 1, L est un entier inférieur à M, et K est un entier inférieur à N ;
la transmission (530) au dispositif de réseau (110), par le dispositif terminal (120), d'informations d'identification des K paires de faisceaux correspondant à chaque faisceau d'émission en question ;
dans lequel la détermination (520), par le dispositif terminal (120), de K paires de faisceaux parmi N paires de faisceaux composées de chaque faisceau d'émission des L faisceaux d'émission et de N faisceaux de réception comprend :
le tri, par le dispositif terminal (120), des N paires de faisceaux sur la base de valeurs de qualités de canal ;
la détermination, par le dispositif terminal (120), des K paires de faisceaux parmi les N paires de faisceaux sur la base d'un résultat du tri ;
dans lequel le procédé comprend en outre :
la transmission, par le dispositif terminal (120), d'informations de qualités de canal correspondant aux K paires de faisceaux correspondant à chaque faisceau d'émission en question, dans lequel les qualités de canal correspondant aux K paires de faisceaux sont supérieures à un premier seuil.

4. Procédé selon la revendication 3, comprenant en outre :
la réception, par le dispositif terminal (120), d'informations d'indication de rapport transmises par le dispositif de réseau (110), dans lequel les informations d'indication de rapport sont utilisées pour ordonner au dispositif terminal (120) de rapporter des informations d'identification d'une paire de faisceaux composée du faisceau d'émission et du faisceau de réception.

5. Procédé de communication, comprenant :
la réception (710), par un dispositif de réseau (110), d'informations d'identification de L paires de faisceaux transmises par un dispositif terminal (120),
dans lequel les L paires de faisceaux sont déterminées par le dispositif terminal (120) parmi M×N paires de faisceaux composées de M faisceaux d'émission du dispositif de réseau (110) et de N faisceaux de réception du dispositif terminal (120), et la qualité de canal correspondant à l'une quelconque des L paires de faisceaux est supérieure ou égale à des qualités de canal correspondant à d'autres paires de faisceaux des M×N paires de faisceaux que les L paires de faisceaux, dans lequel M et N sont des entiers supérieurs à 1, et L est un entier inférieur à M×N ;
le regroupement (720), par le dispositif de réseau (110), de faisceaux d'émission du dispositif de réseau (110) sur la base d'informations d'identification des L paires de faisceaux ;
dans lequel les M×N paires de faisceaux sont triées sur la base de valeurs de qualités de canal, et les L paires de faisceaux sont déterminées parmi les M×N paires de faisceaux sur la base d'un résultat du tri ;
dans lequel le procédé comprend en outre :
la réception d'informations de qualités de canal correspondant aux L paires de faisceaux, dans lequel les qualités de canal des L paires de faisceaux sont supérieures à un premier seuil.

6. Procédé de communication, comprenant :
la réception (810), par un dispositif de réseau (110), d'informations d'identification de K paires de faisceaux correspondant à chaque faisceau d'émission de L faisceaux d'émission émis par un dispositif terminal (120),
dans lequel les L faisceaux d'émission sont déterminés par le dispositif terminal (120) parmi M faisceaux d'émission du dispositif de réseau (110), la qualité de canal correspondant à une paire de faisceaux composée de l'un quelconque des L faisceaux d'émission et d'un premier faisceau de réception correspondant audit un quelconque des faisceaux d'émission est supérieure ou égale à la qualité de canal d'une paire de faisceaux composée de l'un quelconque d'autres faisceaux d'émission des M faisceaux d'émission que les L faisceaux d'émission et d'un premier faisceau de réception dudit un quelconque d'autres faisceaux d'émission, les K paires de faisceaux font partie de N paires de faisceaux composées de chaque faisceau d'émission des L faisceaux d'émission du dispositif terminal (120) et de N faisceaux de réception du dispositif de réseau (110), et la qualité de canal correspondant à chacune des K paires de faisceaux est supérieure à des qualités de canal correspondant à d'autres paires de faisceaux de N paires de faisceaux, qui sont composées de chaque faisceau d'émission des L faisceaux d'émission et des N faisceaux de réception du dispositif terminal, que les K paires de faisceaux, dans lequel le premier faisceau de réception est un faisceau de réception tel que la qualité d'un signal émis par l'intermédiaire d'un faisceau d'émission et reçu par l'intermédiaire du faisceau de réception satisfait à un seuil prédéfini ou est la meilleure, et dans lequel M et N sont des entiers supérieurs à 1, L est un entier inférieur à M, et K est un entier inférieur à N ;
le regroupement (820), par le dispositif de réseau (110), de faisceaux d'émission du dispositif de réseau sur la base d'informations d'identification de K paires de faisceaux correspondant à chaque faisceau d'émission des L faisceaux d'émission ;
dans lequel les N paires de faisceaux sont triées sur la base de valeurs de qualités de canal, et les K paires de faisceaux sont déterminées parmi les N paires de faisceaux sur la base d'un résultat du tri ;
dans lequel le procédé comprend en outre :
la réception d'informations de qualités de canal correspondant aux K paires de faisceaux correspondant à chaque faisceau d'émission en question, dans lequel les qualités de canal correspondant aux K paires de faisceaux sont supérieures à un premier seuil.

7. Dispositif terminal comprenant un module de traitement et un module de communication, dans lequel le module de traitement et le module de communication sont configurés pour mettre en œuvre un procédé selon l'une quelconque des revendications 1 à 2.

8. Dispositif terminal comprenant un module de traitement et un module de communication, dans lequel le module de traitement et le module de communication sont configurés pour mettre en œuvre un procédé selon l'une quelconque des revendications 3 à 4.
